# EUROPÄISCHE PATENTSCHRIFT

(11) **EP 2 640 178 B1**
(45) Veröffentlichungstag und Bekanntmachung des Hinweises auf die Patenterteilung: **27.01.2016**
(21) Anmeldenummer: 11779184.8
(22) Anmeldetag: 07.11.2011
(51) Int. Cl.: A01B 73/06, A01C 23/00

(54) **VORRICHTUNG ZUM STREIFENFÖRMIGEN AUFBRINGEN VON DÜNGEMITTEL**
APPARATUS FOR APPLYING FERTILIZER IN STRIPS
DISPOSITIF POUR L'ÉPANDAGE D'ENGRAIS SELON DES BANDES

(30) Priorität: 15.11.2010 DE 202010015383 U
(43) Veröffentlichungstag der Anmeldung: 25.09.2013
(73) Patentinhaber: Hugo Vogelsang Maschinenbau GmbH, 49632 Essen (DE)
(72) Erfinder: HÜNTELMANN, Karl-Heinz, 49624 Löningen (DE); ELBERS, Guido, 49632 Essen (DE)
(74) Vertreter: Eisenführ Speiser
(86) Internationale Anmeldenummer: PCT/EP2011/069528
(87) Internationale Veröffentlichungsnummer: WO 2012/065871

(56) Entgegenhaltungen:
- DE-U1- 20 017 937
- DE-U1-202008 015 564

## Beschreibung

Die vorliegende Erfindung betrifft eine Vorrichtung zum streifenförmigen Aufbringen eines Düngemittels auf landwirtschaftliche Nutzflächen mittels Schleppschläuchen, die zur Montage an dem Heck eines Tankfahrzeugs eingerichtet ist, mit zwei Auslegern, die jeweils um eine vertikale Achse zwischen einer Ausbringposition und einer Transportposition hin- und herschwenkbar sind, mit einer Stützelnrichtung, welche um eine vertikale Achse schwenkbar an der Vorrichtung angeordnet ist und dazu ausgebildet ist, die Ausleger in der Transportposition gegenüber der Fahrbahn in einem von der Achse beabstandeten Stützabschnitt zu stützen.

Vorrichtungen der vorstehend genannten Art werden gewöhnlicherweise zur umweltschonenden Verteilung organischer Suspensionen wie beispielsweise Gülle auf landwirtschaftlichen Nutzflächen eingesetzt. Mit den vorstehend genannten Vorrichtungen wird eine bodennahe Applikation erzielt, so dass die Verteilung von Ammoniak in der Umgebungsluft gemindert wird. Die Ausbringung von Düngemittel mittels Schleppschläuchen hat sich bewährt, auch auf bewachsenem Boden. Die Schleppschläuche sind in bekannter Weise an den Vorrichtungen zum Ausbringen des Düngemittels anzubringen.

Um eine möglichst große Auftragsbreite im Ausbring-Betrieb zu erreichen, sind die an der Vorrichtung angebrachten Ausleger zwischen einer Transportposition und einer Ausbringposition hin- und herschwenkbar. In der Ausbringposition sind die Ausleger relativ zu der Fahrtrichtung des die Vorrichtung haltenden Tankfahrzeugs seitlich abgespreizt. Eine maximale Auftragsbreite wird bei einer Abspreizung im rechten Winkel zur Fahrtrichtung beziehungsweise zur Längsrichtung des Fahrzeugs erreicht. Die Schwenkbewegung erfolgt vorzugsweise um eine vertikale Achse. Unter vertikaler Ausrichtung wird hierbei eine im Wesentlichen senkrechte Ausrichtung der Schwenkachse relativ zum Fahrzeug-Untergrund verstanden, bzw. eine senkrechte Ausrichtung relativ zu einem als horizontal angenommenen Fahrzeugaufbau.

Um das Tankfahrzeug an seinen Bestimmungsort zum Ausbringen des Düngemittels zu verbringen, ist es oftmals notwendig, das Fahrzeug über öffentliche Straßen oder Wirtschaftswege zu bewegen. Die Vorrichtung zum Ausbringen von Düngemittel kann folglich während des Transports nicht in ihrer Ausbringposition verbleiben.

Von Zugmaschinen gezogene Tankwagen sehen in bekannter Weise schwenkbare Ausleger vor, welche zum Transport von der seitlich abgespreizten Ausbringposition nach vorne an die Seiten des Tankwagens herangeklappt werden. Bei sogenannten Selbstfahrern - Fahrzeuge mit eigenen Antrieb und einem kurzen Tank auf einem einheitlichen Fahrzeugaufbau - ist eine solche Klappanordnung auf Grund der hohen Fahrzeugbreite allerdings nicht umsetzbar.

Aus der DE 200 17 937 U1 ist eine Gestängevorrichtung für ein Verteilerfahrzeug bekannt, welche zum streifenförmigen Ausbringen von Düngemittel auf landwirtschaftlichen Nutzflächen mittels Schleppschläuchen eingerichtet ist und zwei Ausleger aufweist, die jeweils um eine vertikale Achse zwischen einer Ausbringposition und einer Transportposition hinter dem Tankwagen derart vorschlägt, dass eine maximale Breite von 3 m hinter dem Tankwagen eingehalten wird. Die Druckschrift schlägt vor, einen linken Ausleger und einen rechten Ausleger an zwei unterschiedlich langen Schwenkarmen hinter dem Tank anzuordnen und um jeweils 180° von einer Transportposition in die Ausbringposition und zurück zu verschwenken.

Mit der dort vorgeschlagenen Lösung sind allerdings lediglich Auftragsbreiten von bis zu 9 m erreichbar. Zudem erfordert die dort vorgeschlagene Lösung einen erhöhten Teileaufwand. Weiterhin können der linke und rechte Ausleger nicht zeitgleich verschwenkt werden, da ein Ausleger den anderen in der Transportposition verdeckt.

Aus der DE 202008 015 564 A1 ist eine Vorrichtung nach dem Obergegriff des Anspruchs 1 bekannt.

Der Erfindung lag folglich die Aufgabe zu Grunde, eine Vorrichtung der eingangs genannten Art anzugeben, welche eine größere Auftragsbreite ermöglicht und gleichzeitig eine gute Handhabbarkeit der Vorrichtung beim Transport gewährleistet.

Die Erfindung löst die ihr zu Grunde liegende Aufgabe durch einer Vorrichtung nach dem Anspruch 1. Die Erfindung macht sich die Erkenntnis zu Nutze, dass das Vorsehen einer Stützeinrichtung an der Vorrichtung die Möglichkeit schafft, die Ausleger in eine Transportposition zu verbringen, in welcher die Ausleger gerade nach hinten hinter das Tankfahrzeug geschwenkt sind, ohne ineinander verschachtelt werden zu müssen. Bei den bekannten Selbstfahrern, die nur eine kurze Fahrzeuglänge aufweisen, war entweder das Abklappen der Ausleger nach hinten auf Grund der Schwerpunktveränderung nicht möglich, oder die unter akzeptabler Schwerpunktsveränderung noch erreichbare Auftragsbreite war zu gering. Die Stützeinrichtung erlaubt ein Abklappen prinzipiell beliebig langer Ausleger nach hinten. Solange der Abstand zwischen dem Stütz-Abschnitt und dem Heck des Fahrzeugs groß genug ist, lassen sich somit im deutlich größere Auftragsbreiten erreichen, die nur durch die maximal für den Straßenbetrieb zulässige Gespann-Länge begrenzt wird.

Die Erfindung wird vorteilhaft dadurch weitergebildet, dass die Stützeinrichtung eine Zugdeichsel aufweist, welche um die vertikale Achse schwenkbar ist und in dem Stütz-Abschnitt ein oder mehrere Stützräder aufweist, deren Laufrichtung im Wesentlichen parallel zu einer Zugrichtung der Zugdeichsel ist. Durch eine derartige Ausrichtung der Stützräder ist gewährleistet, dass die Stützeinrichtung im Betrieb des Fahrzeugs jedenfalls bei Vorwärtsfahrt des Fahrzeugs Im Wesentlichen spurtreu dem Fahrzeug nachläuft. Das eine beziehungsweise die mehreren Stützräder folgen der durch die Zugdeichsel vorgegebenen Bewegung. Nachdem die Stützeinrichtung auch die Ausleger stützt, laufen die nach hinten zur Stützeinrichtung verschwenkten Ausleger in Transportposition ebenfalls der von dem Fahrzeug vorgegebenen Bewegungsrichtung bei Kurvenfahrten. Die mittels der Stützeinrichtung abgestützte Vorrichtung in Transportposition weist ein Fahrverhalten auf, welches mit einem einachsigen Anhänger vergleichbar ist. Vorzugsweise ist die Zugdeichsel an einem ersten Endabschnitt mit einem Tragrahmen der Vorrichtung verbunden. Weiter vorzugsweise befindet sich der Stützabschnitt an einem diesem Endabschnitt gegenüberliegenden zweiten Endabschnitt der Stützeinrichtung, so dass jenseits des Stützabschnitts bzw. des oder der Stützräder kein unnötiger Überstand der Vorrichtung verbleibt und das Ausschwenken bei Kurvenfahrt minimiert wird. Hierdurch wird die Handhabbarkeit im Transport-Betrieb verbessert. In einer besonders bevorzugten Ausführungsform sind das bzw. die Stützräder nicht angetrieben.

In einer bevorzugten Ausführungsform der Erfindung weist die Stützeinrichtung für jeden der beiden Ausleger jeweils ein Auflager zum Übertragen der Gewichtskraft der Ausleger auf das eine oder die mehreren Stützräder auf.

Die Auflager der beiden Ausleger sind vorzugsweise an einem Querträger montiert, welcher im Wesentlichen parallel zu einer Ebene ausgerichtet ist, in welcher die Achsen der Ausleger liegen. Dadurch, dass der Querträger im Wesentlichen parallel zu der Ebene der Achsen der Ausleger ausgerichtet ist, werden die Ausleger trapezförmig bewegt, wenn das Fahrzeug sich In der Kurvenfahrt befindet.

Besonders bevorzugt ist es, wenn die beiden Ausleger in der Transportposition im Wesentlichen parallel zueinander angeordnet sind. In diesem Fall tritt während der Kurvenfahrt des Fahrzeugs bei montierter Vorrichtung in Transportposition eine parallelogrammartige Bewegung der Ausleger relativ zueinander auf.

Die erfindungsgemäße Vorrichtung wird dadurch vorteilhaft weitergebildet, dass die Ausleger mittels einer Hubeinrichtung höhenbeweglich sind, und in der Transportposition mittels Absenken in Kontakt mit dem jeweiligen Auflager bringbar sind. Im Gegenzug werden die Ausleger mittels Anheben außer Kontakt mit dem jeweiligen Auflager gebracht, und lassen sich sodann von der Transportposition in die Ausbringposition schwenken. Vorzugsweise weisen die Auflager jeweils Arretierelemente auf, mit denen die Ausleger in der Transportposition mittels Absenken in Eingriff bringbar sind. Die Arretierelemente verhindern ein seitliches, unbeabsichtigtes Außereingriffgeraten der Ausleger von der Stützeinrichtung der Vorrichtung. Die Arretierelemente weisen vorzugsweise U-förmige Halteabschnitte auf und/oder optional weitere Rastelemente, wie beispielsweise Haken oder Klemmelemente. Die Arretierelemente sind vorzugsweise dazu ausgebildet, mittels im Wesentlichen vertikal ausgebildeten Führ-Elementen ein unbeabsichtigtes seitliches Schwenken der Ausleger zu unterbinden. Die Gefahr hierfür ist insbesondere dann gegeben, wenn sich aufgrund von Unebenheiten des Untergrunds die Höhe der Ausleger relativ zu der Stützeinrichtung und insbesondere dem jeweiligen Auflager ändert. Die Führ-Elemente sind dazu eingerichtet, die Ausleger wieder dem Auflager zuzuführen. Bei einem U-förmigen Halteabschnitt dienen vorzugsweise die beiden Schenkel des U-Profils als Führ-Elemente.

Gemäß der erfindungsgemäßen Vorrichtung ist die Stützeinrichtung in dem Endabschnitt um eine horizontale Achse schwenkbar gelagert. Dadurch, dass die Stützeinrichtung infolge der Schwenkbarkeit um die horizontale Achse eine Winkeländerung der Zugdeichsel zulässt, werden Unebenheiten auf der Fahrbahn wie beispielsweise Kompressionen oder Geländekuppen im Fahrbetrieb ausgeglichen. Die Stützeinrichtung ist derart um die horizontale Achse schwenkbar, dass die Stützeinrichtung außer Kontakt mit dem Boden gerät. Erfindungsgemäß wird die Stützeinrichtung in eine im Wesentlichen vertikale Position geschwenkt, wenn die Ausleger sich außerhalb der Transportposition befinden. Insbesondere ist dies vorteilhaft, wenn die Ausleger sich in der Ausgabeposition oder auf dem Weg in die Ausgabeposition befinden. Die Stützeinrichtung wird in diesen Fällen nicht benötigt, da auf Grund der Schwenkbewegung der Schwerpunkt der Stützeinrichtung in Richtung Fahrzeug bewegt wird. Zum Einhalten einer Kippstabilität ist es folglich nicht mehr notwendig, die Stützeinrichtung auf dem Boden weiter hinter dem Fahrzeug herzuziehen. Darüberhinaus wird durch das Verschwenken der Stützeinrichtung derart, dass sie außer Kontakt mit dem Boden gerät oder in eine im Wesentlichen vertikale Position, die Manövrierfähigkeit und Beweglichkeit des mit der erfindungsgemäßen Vorrichtung versehen Fahrzeugs weiter erhöht.

Die Ausleger sind in der Ausbringposition gemäß einer weiteren vorteilhaften Ausführungsform der Erfindung um eine horizontale Achse schwenkbar. Die horizontale Achse ist vorzugsweise in Längsrichtung des Fahrzeugs ausgerichtet, so dass ein Verschwenken dieser Achse die Höhe des rechten Auslegers gegenüber dem Untergrund verringert, wobei gleichzeitig die Höhe des gegenüberliegenden Auslegers zum dortigen Untergrund erhöht wird. Eine Schräglage des Fahrzeugs, beispielsweise aufgrund ungleich tief eingesunkener Räder, wird ausgeglichen. Dabei sollte die Verschwenkbarkeit der Achse vorzugsweise +/-10° gegenüber der Horizontalen betragen und stufenlos einstellbar sein.

Die Ausleger sind vorzugsweise jeweils um die jeweilige vertikale Achse schwenkbar an einem Schwenkrahmen gelagert. Der Schwenkrahmen ist vorzugsweise um eine horizontale Achse schwenkbar an dem Tragrahmen gelagert. Die horizontale Achse, um welche der Schwenkrahmen schwenkbar an dem Tragrahmen gelagert ist, ist vorzugsweise die gleiche Achse, um welche die Ausleger in der Ausbringposition horizontal schwenkbar sind.

Gemäß einer alternativen Ausführungsform sind die Ausleger separat voneinander um jeweils eine horizontale Achse oder um die gleiche horizontale Achse in Ausbringposition schwenkbar gelagert. Das Vorsehen des Schwenkrahmens wird als vorteilhaft angesehen, da hierdurch eine mechanische gemeinsame Verbindung mit dem Rest der Vorrichtung geschaffen wird.

Gemäß einer weiteren vorteilhaften Ausführungsform ist die Hubeinrichtung an dem Tankfahrzeug ausgebildet, und der Tragrahmen ist zur Montage an der Hubeinrichtung des Tankfahrzeugs eingerichtet. Dadurch, dass die Hubeinrichtung am Tankfahrzeug bereits ausgebildet ist, wird der Aufbau der erfindungsgemäßen Vorrichtung insgesamt vereinfacht und das diesbezügliche Eigengewicht reduziert. Zur Höhenbeweglichkeit der Ausleger wird der gesamte Tragrahmen von der am Tankfahrzeug vorgesehenen Hubeinrichtung in der Höhe bewegt.

Wenngleich der ganze Tragrahmen in der Höhe bewegt wird, bleibt der stützende Teil der Stützeinrichtung, beispielsweise das Stützrad, aufgrund der Schwenkbarkeit der Stützeinrichtung um die horizontale Achse auf dem Boden. Es wird lediglich der Tragrahmen, und weitere damit verbundene Teile angehoben. Dies kann gemäß bevorzugten Ausführungsformen der Schwenkrahmen sein und/oder die schwenkbar gelagerten Ausleger.

Alternativ ist die Hubeinrichtung an dem Tragrahmen ausgebildet, und der Schwenkrahmen ist mittels der Hubeinrichtung relativ zu dem Tragrahmen höhenbeweglich. Dies ist insbesondere vorteilhaft bei Fahrzeugen ohne eigene Hubeinrichtung. Bei Fahrzeugen, die selbst bereits mit einer Hubeinrichtung versehen sind, wird durch eine zusätzliche Hubeinrichtung allerdings der Bewegungsspielraum in der Höhenverstellung nochmals erhöht, wenngleich ein höheres Gewicht und höhere Komplexität der Steuerung in Kauf genommen werden muss.

Die Ausleger weisen gemäß einer weiteren vorteilhaften Ausführungsform jeweils ein Verlängerungs-Segment auf, welches zwischen einer Transportposition und einer Ausbringposition hin- und herschwenkbar an einem Endabschnitt des jeweiligen Auslegers angeordnet ist. Das Verlängerungs-Segment ist vorzugsweise um eine horizontale Achse schwenkbar an dem Endabschnitt des jeweiligen Auslegers befestigt und in der Transportposition um 180° in Fahrtrichtung nach vorne geschwenkt. In Ausbringposition wird das jeweilige Verlängerungs-Segment aus der Transportposition in die Ausbringposition verschwenkt, wodurch eine weitere Vergrößerung der Auftragsbreite erreicht wird.

In noch einer weiteren bevorzugten Ausführungsform der Erfindung ist der Querträger höhenverstellbar ausgebildet. Auf diese Weise ist der Höhenträger dazu ausgebildet, eine beispielsweise aufgrund von Fahrbahnunebenheiten auftretenden Höhenänderung der Ausleger relativ zu dem jeweiligen Auflager zu kompensieren, indem der Querträger durch eine Höhenverstellung die Auflager nachführt. Die Höhenverstellung erfolgt vorzugsweise federunterstützt oder motorisch.

Die Erfindung löst die ihr zu Grund liegende Aufgabe weiterhin bei einem Tankfahrzeug der eingangs genannten Art dadurch, dass das Tankfahrzeug eine Ausbringvorrichtung aufweist, die gemäß einer vorteilhaften Ausführungsform der vorliegenden Erfindung ausgebildet ist.

Die Erfindung wird im Folgenden anhand bevorzugter Ausführungsformen und unter Bezugnahme auf die beigefügten Figuren näher erläutert. Hierbei zeigt
- Figur 1: eine räumliche Darstellung der erfindungsgemäßen Vorrichtung in einer bevorzugten Ausführungsform;
- Figur 2: eine schematische Seitenansicht des erfindungsgemäßen Tankfahrzeugs samt erfindungsgemäßer Vorrichtung in einer bevorzugten Ausführungsform;
- Figur 3: eine Seitenansicht der erfindungsgemäßen Vorrichtung aus den Figuren 1 und 2; und
- Figur 4: eine weitere Seitenansicht der Vorrichtung aus Figur 3.

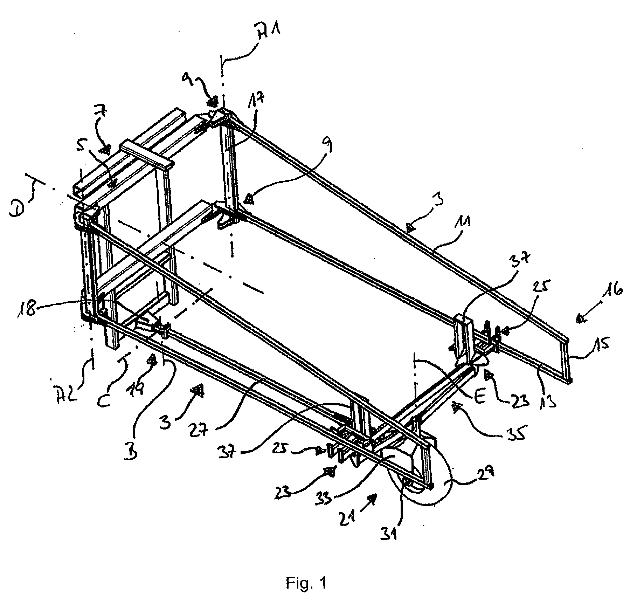

In Figur 1 ist die erfindungsgemäße Vorrichtung zum Ausbringen von Düngemittel schematisch räumlich dargestellt. Die Vorrichtung 1 weist zwei Ausleger 3 auf, von denen ein Ausleger 3 um eine vertikale Achse A1 schwenkbar an einem Schwenkrahmen 5 gelagert ist. Der zweite Ausleger 3 ist um eine vertikale Achse A2 schwenkbar an dem Schwenkrahmen 5 gelagert. Beide Ausleger 3 sind baugleich, so dass nur einer der Ausleger mit Bezugszeichen versehen ist. Die Ausleger 3 weisen jeweils einen oberen und unteren Lagerabschnitt 9 auf. Zwischen den jeweiligen Lagerabschnitten 9 erstreckt sich eine erste vertikale Strebe 17. Die vertikale Strebe 17 bildet ein fahrzeugnahes Ende der Ausleger 3. An dem der jeweiligen Strebe 17 gegenüberliegenden Ende des jeweiligen Auslegers 3 ist jeweils eine zweite vertikale Strebe 15 angeordnet. Die zweite vertikale Strebe 15 und die erste vertikale Strebe 17 sind im Wesentlichen parallel zueinander ausgebildet. Die zweite vertikale Strebe 15 ist kürzer als die erste vertikale Strebe 17, so dass der Ausleger 3 insgesamt trapezförmig ausgebildet ist. Hierbei ist eine untere horizontale Strebe 13 im Wesentlichen horizontal ausgerichtet, während eine obere horizontale Strebe 11 in Richtung der zweiten vertikalen Strebe 15 abfallend ausgerichtet ist.

Der Schwenkrahmen 5 ist um eine horizontale Achse, angedeutet mit Bezugszeichen D, schwenkbar an einem Tragrahmen 7 gelagert. Der Tragrahmen 7 ist an einem (in Figur 1 nicht dargestellten) Tankfahrzeug anbringbar. Die Achse D verläuft im Wesentlichen in Längsrichtung des Tankfahrzeugs und im Wesentlichen rechtwinklig zu den Achsen A1 und A2. An einem im montierten Zustand der Vorrichtung bodennahen Bereich ist eine Aufnahme 18 angeordnet, die mit einer Zugdeichsel 27 koppelbar ist. In Figur 1 ist eine daran angekoppelte Zugdeichsel 27 dargestellt. Die Zugdeichsel 27 ist um die vertikale Achse B relativ zu dem Tragrahmen 7 der Vorrichtung 1 verschwenkbar. Die Verbindung zwischen Aufnahme 18 und Zugdeichsel 27 ist in einem Endabschnitt 19 der Zugdeichsel 27 angeordnet. Von dem Endabschnitt der Zugdeichsel beabstandet befindet sich ein Stützabschnitt 21. Der Stützabschnitt 21 und die Zugdeichsel 27 sind Teil einer Stützeinrichtung 10.

Die Stützeinrichtung 10 weist in dem Stützabschnitt 21 ein Stützrad 29 auf. Das Stützrad 29 ist mittels einer Achse 31 in einem Radkasten 33 gelagert. Der Radkasten 33 Ist an einem dem Endabschnitt 19 gegenüberliegenden Ende der Zugdeichsel 27 angeordnet. Auf dem Radkasten 33 ist ein Querträger 35 angeordnet. Im Wesentlichen symmetrisch beidseits des Radkastens sind an dem Querträger 35 zwei Auflager 23 angeordnet. Die Auflager 23 sind zur Aufnahme jeweils eines Auslegers 3 ausgebildet. In Figur 1 befinden sich die Ausleger 3 jeweils in Transportposition und im Eingriff mit den Auflagern 23 und werden durch diese abgestützt.

An den Auflagern 23 ist jeweils eines beziehungsweise sind mehrere Arretierelemente 25 angeordnet, welche die horizontale Strebe 13 des jeweiligen Auslegers 3 in der Transportposition arretiert halten. Weiterhin ist an den Auflagern jeweils mindestens ein vertikal ausgerichtetes Führ-Element 37 ausgebildet. Das mindestens eine Führ-Element 37 ist zum Führen jeweils eines höhenverstellten Auslegers 3 gegen unbeabsichtigtes seitliches Verschwenken ausgebildet. Diesbezüglich wird auf die nachfolgenden Erörterungen verwiesen.

Die Stützeinrichtung 10 ist relativ zu dem Tragrahmen 7 der Vorrichtung um die horizontale Achse C schwenkbar ausgebildet.

Jeder der beiden Ausleger 3 weist einen End-Abschnitt 16 auf, der gegenüberliegend von der Lagerung des jeweiligen Auslegers angeordnet ist. Der Ausleger 3 ist jeweils in diesem End-Abschnitt (nicht dargestellt) zur Aufnahme eines Verlängerungs-Segments eingerichtet, welches zwischen einer Transportposition und einer Ausbringposition hin- und herschwenkbar ist.

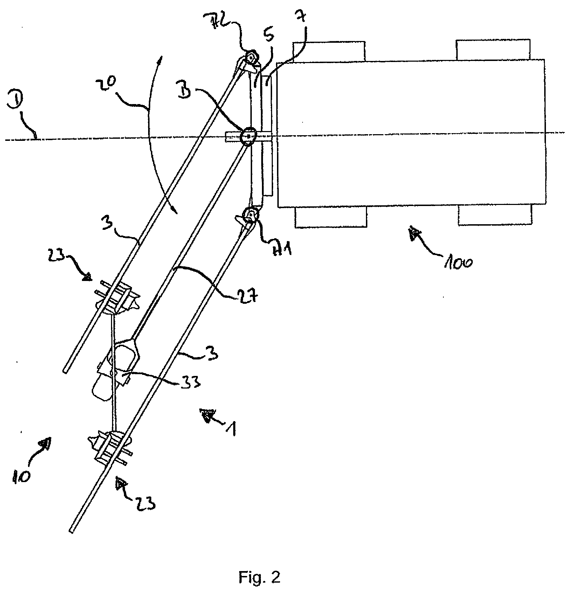

Figur 2 zeigt eine Draufsicht von oben auf eine Vorrichtung gemäß einer bevorzugten Ausführungsform der vorliegenden Erfindung, die an einem Tankfahrzeug 100 montiert ist. Das Tankfahrzeug 100 befindet sich im in Figur 2 gezeigten Zustand in einer Kurvenfahrt. Die Vorrichtung 1 läuft dem Tankfahrzeug 100 nach, indem die Ausleger 3 jeweils von der Stützeinrichtung 10 gestützt und in dem jeweiligen Auflager 23 gehalten sind. Der Querträger 35 ist um eine Achse E (siehe Figur 1) schwenkbar auf dem Radkasten 33 gelagert und parallel zu einer Ebene angeordnet, in welcher die Achsen A1 und A2 der Ausleger 3 liegen. Diese Ebene ist weiterhin parallel zu dem Schwenkrahmen 5 und dem Tragrahmen 7 ausgebildet. Die Ausleger 3 sind parallel zueinander ausgerichtet, so dass die Stützeinrichtung 10 die Ausleger 3 parallelogrammartig hinter dem Fahrzeug 100 nachführt.

Die Schwenkbewegung der Vorrichtung 1 im Einklang mit der Stützeinrichtung 10 ist auch durch Pfeil 20 angedeutet. Die Zugdeichsel 27 der Stützeinrichtung 10 ist um die vertikale Achse B verschwenkt. Vorzugsweise verläuft die Achse B, wie in Figur 2 gezeigt, in der gleichen Ebene wie die Schwenkachsen A1 und A2.

Das Fahrzeug 100 besitzt eine Längsachse, welche im Wesentlichen parallel zu der Achse D, um welche der Schwenkarm 5 relativ zu dem Tragarm schwenkbar ist.

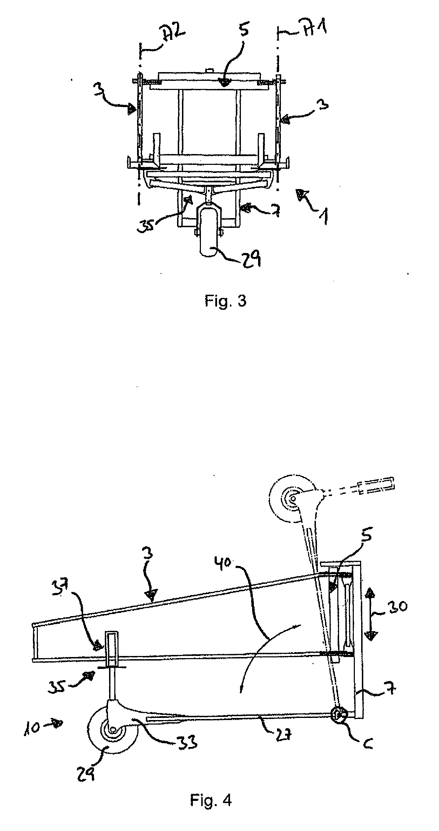

In den Figuren 3 und 4 ist die erfindungsgemäße Vorrichtung 1 in Seitenansicht dargestellt. Figur 3 zeigt die Vorrichtung 1 in einer Ansicht von hinten (in VorwärtsFahrtrichtung des Fahrzeugs) ohne Fahrzeug 100. Figur 4 zeigt eine Seitenprojektion der Vorrichtung aus Figur 3 mit zwei angedeuteten Betriebszuständen. In Bezug auf die insoweit identischen Bezugszeichen wird auf die vorigen Figuren 1 und 2 verwiesen. In den Figuren 3 und 4 ist auch die Verstellbarkeit der Vorrichtung 1 veranschaulicht. Die Ausleger 3 der Vorrichtung 1 sind in Richtung der Pfeile 30 relativ zu dem Fahrzeug 100 höhenverstellbar. Wird die Vorrichtung 1 beziehungsweise werden insbesondere jeweils die Ausleger 3 in Richtung des Pfeils 30 in gezeigter Orientierung nach oben bewegt, bleibt das Stützrad 29 auf dem Boden stehen, wodurch sich der Winkel der Zugdeichsel 27 relativ zu der Achse C und dem Rest der Vorrichtung 1 verändert. Die Ausleger 3 werden aus der Position in ihrem jeweiligen Auflager 23 gelöst und entlang der Führung 37 in der Höhe bewegt. Nach vollzogener Höhenverstellung werden die Ausleger 3 aus der Transportposition in die Ausbringposition verschwenkt. Im Anschluss daran oder währenddessen wird die Stützeinrichtung 10 um die Achse C in eine im Wesentlichen vertikale Position nach oben verschwenkt. Die Stützeinrichtung 10 wird so dem Tragrahmen 7 und dem Schwenkrahmen 5 angenähert, so dass die Länge des Verbundes aus Fahrzeug 100 und Vorrichtung 1 (siehe Figur 2) minimiert wird.

## Patentansprüche

1. Vorrichtung (1) zum streifenförmigen Ausbringen eines Düngemittels auf landwirtschaftliche Nutzflächen mittels Schleppschläuchen, die zur Montage an dem Heck eines Tankfahrzeugs (100) eingerichtet ist, mit zwei Auslegern (3), die jeweils um eine vertikale Achse (A1, A2) zwischen einer Ausbringposition und einer Transportposition hin- und herschwenkbar sind,
mit einer Stützeinrichtung (10), welche um eine vertikale Achse (B) schwenkbar an der Vorrichtung (1) angeordnet und dazu ausgebildet ist, die Ausleger (3) in der Transportposition gegenüber der Fahrbahn in einem von der Achse (B) beabstandeten Stütz-Abschnitt (21) zu stützen,
**dadurch gekennzeichnet, dass** die Stützeinrichtung (10) in dem Endabschnitt um eine horizontale Achse (C) schwenkbar gelagert und um die horizontale Achse (C) in eine im Wesentlichen vertikale Position schwenkbar ist, wenn die Ausleger (3) sich außerhalb der Transportposition befinden.

2. Vorrichtung (1) nach Anspruch 1,
**dadurch gekennzeichnet, dass** die Stützeinrichtung (10) eine Zugdeichsel (27) aufweist, welche um die vertikale Achse (B) schwenkbar ist, und in dem Stütz-Abschnitt (21) ein oder mehrere Stützräder (29) aufweist, deren Laufrichtung im Wesentlichen parallel zu einer Zugrichtung der Zugdeichsel (27) ist.

3. Vorrichtung (1) nach Anspruch 1 oder 2,
**dadurch gekennzeichnet, dass** die Stützeinrichtung (10) für jeden der beiden Ausleger (3) jeweils ein Auflager (23) zur Kraftübertragung der Ausleger (3) auf das eine oder die mehreren Stützräder (29) aufweist.

4. Vorrichtung (1) nach Anspruch 3,
**dadurch gekennzeichnet, dass** die Auflager (23) der beiden Ausleger (3) an einem Querträger (35) montiert sind, welcher im Wesentlichen parallel zu einer Ebene, in welcher die Achsen (A1,A2) der Ausleger (3) liegen, ausgerichtet ist.

5. Vorrichtung (1) nach einem der vorstehenden Ansprüche,
**dadurch gekennzeichnet, dass** die beiden Ausleger (3) in der Transportposition im Wesentlichen parallel zu einander angeordnet sind.

6. Vorrichtung (1) nach einem der vorstehenden Ansprüche 3 bis 5,
**dadurch gekennzeichnet, dass** die Ausleger (3) mittels einer Hubeinrichtung höhenbeweglich sind, und in der Transportposition mittels Absenken in Kontakt mit dem jeweiligen Auflager (23) bringbar sind.

7. Vorrichtung (1) nach Anspruch 6,
**dadurch gekennzeichnet, dass** die Auflager (23) jeweils Arretierelemente (25) aufweisen, mit denen die Ausleger (3) in der Transportposition mittels Absenken in Eingriff bringbar sind.

8. Vorrichtung (1) nach einem der vorstehenden Ansprüche,
**dadurch gekennzeichnet, dass** die Ausleger (3) in der Ausbringposition um eine horizontale Achse (D) schwenkbar sind.

9. Vorrichtung (1) nach Anspruch 8,
**dadurch gekennzeichnet, dass** die Ausleger (3) jeweils um die vertikale Achse (A1, A2) schwenkbar an einem Schwenkrahmen (5) gelagert sind.

10. Vorrichtung (1) nach Anspruch 9,
**dadurch gekennzeichnet, dass** der Schwenkrahmen (5) um eine horizontale Achse (D) schwenkbar an einem Tragrahmen (7) gelagert ist.

11. Vorrichtung (1) nach einem der Ansprüche 6 bis 10,
**dadurch gekennzeichnet, dass** die Hubeinrichtung an dem Tankfahrzeug (100) ausgebildet ist und der Tragrahmen (7) zur Montage an der Hubeinrichtung des Tankfahrzeugs (100) eingerichtet ist.

12. Vorrichtung (1) nach einem der Ansprüche 1 bis 11,
**dadurch gekennzeichnet, dass** die Hubeinrichtung an dem Tragrahmen (7) ausgebildet ist und der Schwenkrahmen (5) mittels der Hubeinrichtung relativ zu dem Tragrahmen (7) höhenbeweglich ist.

13. Vorrichtung (1) nach einem der vorstehenden Ansprüche,
**dadurch gekennzeichnet, dass** die Ausleger (3) jeweils ein Verlängerungs-Segment aufweisen, welches zwischen einer Transportposition und einer Ausbringposition hin- und herschwenkbar an einem End-Abschnitt des jeweiligen Auslegers (16) angeordnet ist.

14. Vorrichtung nach einem der Ansprüche 4 bis 13,
**dadurch gekennzeichnet, dass** der Querträger (35) höhenverstellbar ausgebildet ist.

15. Tankfahrzeug (100), insbesondere landwirtschaftliches Tankfahrzeug, mit einer Vorrichtung (1) zum streifenförmigen Aufbringen eines Düngemittels auf landwirtschaftliche Nutzflächen mittels von Verteilerorganen gespeister Schleppschläuche, die an dem Heck eines landwirtschaftlichen Tankfahrzeugs (100) montiert ist,
**dadurch gekennzeichnet, dass** die Vorrichtung (1) zum streifenförmigen Aufbringen eines Düngemittels nach einem der Ansprüche 1 bis 14 ausgebildet ist.

## Claims

1. An apparatus (1) for discharging a fertiliser in strips to agriculturally productive surfaces by means of trailing hoses, which apparatus is adapted for mounting on the rear of a tank vehicle (100), with two booms (3) which are each reciprocatingly pivotable about a respective vertical axis (A1, A2) between a discharge position and a transport position,
having a support device (10) which is arranged on the apparatus (1) pivotably about a vertical axis (B) and is adapted to support the booms (3) in the transport position in relation to the carriageway in a support portion (21) spaced from the axis (B),
**characterized in that** the support device (10) is mounted pivotably about a horizontal axis (C) in the end portion, and is pivotable about the horizontal axis (C) into a substantially vertical position when the booms (3) are outside the transport position.

2. Apparatus (1) as set forth in claim 1
**characterised in that** the support device (10) has a towbar (27) pivotable about the vertical axis (B) and in the support portion (21) has one or more support wheels (29), the direction of travel of which is substantially parallel to a towing direction of the towbar (27).

3. Apparatus (1) as set forth in claim 1 or claim 2
**characterised in that** the support device (10) for each of the two booms (3) has a respective supporting means (23) for the transmission of force of the booms (3) to the one or more support wheels (29).

4. Apparatus (1) as set forth in claim 3 **characterised in that** the supporting means (23) of the two booms (3) are mounted to a transverse carrier (35) which is oriented substantially parallel to a plane in which the axes (A1, A2) of the booms (3) lie.

5. Apparatus (1) as set forth in one of the preceding claims **characterised in that** in the transport position the two booms (3) are arranged substantially parallel to each other.

6. Apparatus (1) as set forth in one of claims 3 to 5,
**characterised in that** the booms (3) are movable in respect of height by means of a lifting device and in the transport position can be brought into contact with the respective supporting means (3) by means of a lowering movement.

7. Apparatus (1) as set forth in claim 6
**characterised in that** the supporting means (23) respectively have arresting elements (25) with which the booms (3) can be brought into engagement in the transport position by means of a lowering movement.

8. Apparatus (1) as set forth in one of the preceding claims **characterised in that** the booms (3) are pivotable about a horizontal axis (D) in the discharge position.

9. Apparatus (1) as set forth in claim 8 **characterised in that** the booms (3) are respectively mounted to a pivotal frame (5) pivotably about the vertical axis (A1, A2).

10. Apparatus (1) as set forth in claim 9 **characterised in that** the pivotal frame (5) is mounted to a carrier frame (7) pivotably about a horizontal axis (D).

11. Apparatus (1) as set forth in one of claims 6 through 12 **characterised in that** the lifting device is provided on the tank vehicle (100) and the carrier frame (7) is adapted for mounting to the lifting device of the tank vehicle (100).

12. Apparatus (1) as set forth in one of claims 1 through 12 **characterised in that** the lifting device is provided on the carrier frame (7) and the pivotal frame (5) is movable in respect of height relative to the carrier frame (7) by means of the lifting device.

13. Apparatus (1) as set forth in one of the preceding claims **characterised in that** the booms (3) respectively have a prolongation segment which is arranged at an end portion of the respective boom (16) reciprocatingly pivotably between a transport position and a discharge position.

14. Apparatus as set forth in one of claims 4 through 15 **characterised in that** the transverse carrier (35) is adapted to be displaceable in respect of height.

15. A tank vehicle (100), in particular an agricultural tank vehicle, comprising an apparatus (1) for applying a fertiliser in strips to agriculturally productive surfaces by means of trailing hoses which are fed by distributor members and which are mounted to the rear of an agricultural tank vehicle (100), **characterised in that** the apparatus (1) for applying a fertiliser in strip form is in accordance with one of claims 1 through 14.

## Revendications

1. Dispositif (1) pour l'épandage en bandes d'un engrais sur des surfaces agricoles utiles à l'aide de tuyaux flexibles, qui est conçu pour être monté à l'arrière d'un véhicule-citerne (100), avec deux flèches (3), qui peuvent pivoter avec un mouvement de va-et-vient autour d'un axe vertical (A1, A2) entre une position d'épandage et une position de transport, avec un dispositif d'appui (10) qui est disposé sur le dispositif (1) de manière pivotante autour d'un axe vertical (B) et conçu pour soutenir les flèches (3) dans la position de transport par rapport à la chaussée dans une portion d'appui (21) éloignée de l'axe (B), **caractérisé en ce que** le dispositif d'appui (10) est logé de manière pivotante dans la portion d'extrémité autour d'un axe horizontal (C) et est pivotant autour de l'axe horizontal (C) vers une position essentiellement verticale, lorsque les flèches (3) se trouvent hors de la position de transport.

2. Dispositif (1) selon la revendication 1,
**caractérisé en ce que** le dispositif d'appui (10) comprend un timon de traction (27) qui est pivotant autour de l'axe vertical (B) et comprend dans la portion d'appui (21) une ou plusieurs roues d'appui (29) dont la direction de roulement est essentiellement parallèle à la direction de traction du timon de traction (27).

3. Dispositif (1) selon la revendication 1 ou 2,
**caractérisé en ce que** le dispositif d'appui (10) comprend, pour chacune des deux flèches (3), un support (23) pour la transmission des forces des flèches (3) vers une ou plusieurs des roues d'appui (29).

4. Dispositif (1) selon la revendication 3,
**caractérisé en ce que** les supports (23) des deux flèches (3) sont montés sur une traverse (35) qui est alignée parallèlement à un plan dans lequel les axes (A1, A2) des flèches (3).

5. Dispositif (1) selon l'une des revendications précédentes,
**caractérisé en ce que** les deux flèches (3) sont disposées essentiellement parallèlement l'un à l'autre.

6. Dispositif (1) selon l'une des revendications précédentes 3 à 5,
**caractérisé en ce que** les flèches (3) sont mobiles en hauteur à l'aide d'un dispositif de levage et peuvent être amenées dans la position de transport à l'aide d'un abaissement en contact avec le support (23) correspondant.

7. Dispositif (1) selon la revendication 6,
**caractérisé en ce que** les supports (23) comprennent chacun des éléments de blocage (25) avec lesquels les flèches (3) peuvent être amenées en emboîtement dans la position de transport à l'aide d'un abaissement.

8. Dispositif (1) selon l'une des revendications précédentes,
**caractérisé en ce que** les flèches (3) peuvent pivoter dans la position d'épandage autour d'un axe horizontal (D).

9. Dispositif (1) selon la revendication 8,
**caractérisé en ce que** les flèches (3) sont logées de manière pivotante autour de l'axe vertical (A1, A2) au niveau d'un châssis pivotant (5).

10. Dispositif (1) selon la revendication 9,
**caractérisé en ce que** le châssis pivotant (5) est logé de manière pivotante autour d'un axe horizontal (D) au niveau d'un châssis de support (7).

11. Dispositif (1) selon l'une des revendications 6 à 10,
**caractérisé en ce que** le dispositif de levage est disposé sur le véhicule-citerne (100) et le châssis de support (7) est conçu pour le montage sur le dispositif de levage du véhicule-citerne (100).

12. Dispositif (1) selon l'une des revendications 1 à 11,
**caractérisé en ce que** le dispositif de levage est disposé sur le châssis de support (7) et le châssis pivotant (5) est mobile en hauteur par rapport au châssis de support (7) à l'aide du dispositif de levage.

13. Dispositif (1) selon l'une des revendications précédentes,
**caractérisé en ce que** les flèches (3) comprennent chacune un segment de rallonge qui peut être pivoté avec un mouvement de va-et-vient entre une position de transport et une position d'épandage au niveau d'une portion d'extrémité de la flèche (16) correspondante.

14. Dispositif (1) selon l'une des revendications 4 à 13,
**caractérisé en ce que** la traverse (35) est conçue de manière réglable en hauteur.

15. Véhicule-citerne (100), plus particulièrement véhicule-citerne agricole, avec un dispositif (1) pour l'épandage en bandes d'un engrais sur des surfaces agricoles utiles à l'aide de tuyaux flexibles alimentés par des éléments de répartition, qui est monté à l'arrière d'un véhicule-citerne agricole (100),
**caractérisé en ce que** le dispositif (1) est conçu pour l'épandage en bandes d'un engrais selon l'une des revendications 1 à 14.
